# EUROPÄISCHE PATENTANMELDUNG

(11) **EP 4 459 843 A1**
(43) Veröffentlichungstag der Anmeldung: **06.11.2024**
(21) Anmeldenummer: 24169490.0
(22) Anmeldetag: 10.04.2024
(51) Int. Cl.: H02K 1/276, H02K 1/28

(54) **EIN AUF EINER WELLE DREHFEST FIXIERBARES LAMELLENPAKET SOWIE EINE ELEKTRISCHE MASCHINE MIT EINEM SOLCHEN LAMELLENPAKET**

(30) Priorität: 20.04.2023 DE 102023203674
(71) Anmelder: VOLKSWAGEN AG, 38440 Wolfsburg (DE)
(72) Erfinder: Pieper, Sven, 33178 Borchen (DE); Bachmann, Tim, 34308 Bad Emstal (DE); Prokoph, Stefan, 34295 Edermünde (DE)

(57) **Zusammenfassung**

Die Erfindung betrifft ein auf einer Welle (1) einer nicht weiter dargestellten elektrischen Maschine drehfest fixierbares Lamellenpaket mit einer Vielzahl von planparallelen, flächig gegeneinander anliegenden Lamellen (3), deren Ausformungen gemeinsam einen Lamellenkeil (7) bilden, der in einer durch seitliche Innenwandflächen (8) begrenzten nutenförmigen Ausnehmung (9) der Welle (1) drehfest fixiert ist. Eine Seitenfläche (11) der Lamelle (3) wird bei der Montage derart zwischen der Stirnfläche der benachbarten Lamelle (3) und der Innenwandfläche (8) der Ausnehmung (9) verklemmt, dass die entstehende Abwinkelung (12) zugleich diese Lamelle (3) und eine benachbarte weitere Lamelle (3) in der Ausnehmung (9) fixiert.

## Beschreibung

Die Erfindung betrifft ein für eine elektrische Maschine bestimmtes, auf einer Welle oder einer Achse der elektrischen Maschine drehfest fixierbares Lamellenpaket mit einer Vielzahl von planparallelen, flächig gegeneinander anliegenden Lamellen, die jeweils eine insbesondere ringförmig geschlossene Durchbrechung für die Welle oder Achse aufweisen, wobei mehrere Lamellen zur form- und kraftschlüssigen Fixierung des Lamellenpakets in zumindest einer durch seitliche Innenwandflächen begrenzten nutenförmigen Ausnehmung der Welle oder der Achse zumindest eine nach innen weisende Ausformung aufweisen, wobei mehrere Ausformungen gemeinsam zumindest einen Lammellenkeil bilden und zumindest einzelne der Ausformungen in Umfangsrichtung zumindest eine Seitenfläche mit einer Abbiegung und/oder Abwinkelung aufweisen, die mit einer Haupterstreckungsebene der die Ausformung aufweisenden Lamelle einen stumpfen Winkel einschließt, wobei die Seitenfläche eine Kontaktfläche zur Anlage gegen die Innenwandfläche und zur kraft- und formschlüssigen Fixierung in der Ausnehmung hat, wobei in dem Lamellenpaket auf jede Lamelle mit einer die Abbiegung oder die Abwinkelung aufweisenden Ausformung zumindest eine weitere, mit einer eine Stirnfläche aufweisenden Ausformung ausgestattete Lamelle folgt, wobei die Stirnfläche in der Fixierposition einen Spalt zu der Innenwandfläche mit einem Abstand begrenzt und wobei sich in der Fixierposition die Abbiegung oder die Abwinkelung der ersten Lamelle bis in den durch die zweite Lamelle begrenzten Spalt erstreckt und die Innenfläche der ersten Lamelle der Stirnfläche der Ausformung der zweiten Lamelle zugewandt ist. Weiterhin betrifft die Erfindung einen für eine elektrische Maschine bestimmten Rotor oder Stator mit zumindest einem auf einer Welle oder Achse drehfest fixierten Lamellenpaket.

Elektrische Maschinen sind mit Rotoren ausgestattet, die in der Regel eine Rotorwelle aufweisen, auf der mehrere Lamellenbleche als Lamellenpaket drehfest befestigt sind, um Verlustleistungen aufgrund elektrischer Wirbelströme zu reduzieren.

Die Herstellung von Rotoren für elektrische Maschinen erfordert eine sichere Verbindung zwischen den Lamellenblechpaketen und der Rotorwelle, um eine effektive Übertragung der Drehmomente zu gewährleisten. Hierbei finden heute zumeist Fügeverfahren Verwendung, die sowohl kraft- als auch formschlüssig sind und eine stabile Verbindung zwischen der Rotorwelle und dem Lamellenblechpaket sicherstellen.

Um eine sichere Übertragung des Drehmoments zwischen den Lamellen- oder Blechpaketen und der Welle zu gewährleisten, werden bei der Fertigung von Rotoren zusätzliche Techniken wie Klemmverfahren und/oder axiale Laminierung eingesetzt. Durch diese Verfahren wird eine stabile Verbindung zwischen den einzelnen Komponenten hergestellt, was entscheidend für die Leistungsfähigkeit der Maschine ist. Ferner sind auch weitere Fügetechniken bekannt, bei denen eine Übermaß-Passung zum Fixieren des Lamellenpakets auf der Rotorwelle verwendet wird.

Aus der JP 2014 - 176 218 A ist eine Lamellenkeilfedergeometrie eines Lamellenpakets für einen Rotor bekannt, die mit einem Übermaß zu einer Nutbreite beaufschlagt ist und zu einer Reduzierung einer Biegesteifigkeit eine symmetrische und asymmetrische Schlitznut in einem Lamellenkeil aufweist, wodurch bei einem Einführen des Lamellenkeils des Lamellenpakets in eine Wellennut, der Lamellenkeil in der Wellennut um die Schlitzbreite zusammengepresst und in der Wellennut fixiert wird. Somit wird eine ungewollte axiale Verlagerung des Lamellenpakets reduziert.

Die JP 2016 - 123 240 A betrifft eine Lamellenkeilfedergeometrie eines Rotorkerns, der sich aus mehreren axial gestapelten Lamellen zusammensetzt. Die Lamellen bestehen aus einem elektromagnetischen Stahlblech und weisen einen in radialer Richtung vorstehenden verjüngten Lamellenkeil auf, der aufgrund der konstruktiven Form der Wellennut elastisch verformbar ist und zur Fixierung des Rotorkerns in der trapezförmigen Wellennut dient. Die verjüngten Lamellenkeile des Rotorkerns werden beim Einführen in die trapezförmige Wellennut durch das partielle Überlappen zur Wellennut umgeformt und dadurch in der Wellennut gegen eine ungewollte axiale Verlagerung gesichert.

Eine Lamellenkeilgeometrie eines Rotorkerns ist weiterhin durch die EP 3 514 921 A1 für eine rotierende Welle mit einem sich in axialer Richtung erstreckenden Rillenabschnitt bekannt. Der Rotorkern besteht aus mehreren Elektroblechen, die durch ein axiales Laminieren miteinander verbunden sind und einen Lamellenkeil aufweisen. Der Lamellenkeil nimmt eine Rotorwelle über eine Wellennut auf. Die Lamellen des Rotorkerns sind an mindestens einer Nutflanke des Lamellenkeils abwechselnd mit einem Übermaß oder mit einem Untermaß zu einer Wellennutbreite beaufschlagt. Die erste Lamelle weist ein Übermaß auf und wird durch ein Einführen in die Rotorwelle an den Seitenflächen verformt. Die zweite Lamelle ist eine Untermaßlamelle, die durch das Laminieren mit der ersten und der nachfolgenden Lamelle verbunden ist. Die Lamellenkeile werden so in der Wellennut montiert, dass die Übermaßlamellen das Lamellenpaket durch Verformung der Nutflanken beim Einführen in die Wellennut auf der Welle fixieren.

Als nachteilig bei dem beschriebenen Stand der Technik erweist sich insbesondere, dass es aufgrund der Aufstaplung der übermaß- und untermaßbeaufschlagten axial laminierten Lamellen beim Montieren des Lamellenpakets auf der Welle mittels einer Welle-Nabe-Verbindung durch eine ungleichmäßige Aufnahme der Querkräfte zu unerwünschten Verlagerungen und Verformungen in den Lamellen kommen kann, was ein gleichmäßiges Anliegen der Lamellen zueinander beeinträchtigt. Demgegenüber entsteht bei Verwendung der axialen Laminierung der Lamellenbleche durch die kraftschlüssige und irreversible Fixierung des Lamellenpakets auf der Welle ein erheblicher Mehraufwand bei der Herstellung des Lamellenpakets sowie der Montage und Demontage, bei der eine Wiederverwendbarkeit beeinträchtig ist. Ferner nimmt durch die Defekte an der Laminierung aufgrund dielektrischer Durchschläge die Effizienz der elektrischen Maschine ab.

Vor diesem Hintergrund liegt der Erfindung die Aufgabe zugrunde, ein Lamellenpaket sowie einen für eine elektrische Maschine bestimmten Rotor oder Stator der eingangs genannten Art derart auszuführen, dass eine wesentlich vereinfachte Herstellung, Montage und Demontage sowie Wiederverwendbarkeit oder Wiederverwertbarkeit des Lamellenpakets erreicht und eine ungewollte Verformung der Lamellen durch die vollständige Aufnahme der Querkräfte des Lamellenpakets reduziert sowie zugleich deren axiale Fixierung auf der Rotorwelle beziehungsweise Statorwelle verbessert wird.

Diese Aufgabe wird gelöst mit einem Lamellenpaket gemäß den Merkmalen des Patentanspruchs 1. Die Unteransprüche betreffen besonders zweckmäßige Weiterbildungen der Erfindung.

Erfindungsgemäß liegt bei dem Lamellenpaket die Innenfläche der Abbiegung oder der Abwinkelung der ersten Lamelle zumindest in der Fixierposition gegen die Stirnfläche der zweiten Lamelle derart an, dass eine auf die Kontaktfläche der Abbiegung oder der Abwinkelung der ersten Lamelle wirkende Fixierkraft, insbesondere also die Vorspannkraft gegenüber der Innenwandfläche, mittels der Innenfläche der Abbiegung oder der Abwinkelung der ersten Lamelle auf die Stirnfläche der Ausformung der zweiten Lamelle übertragbar ist.

Die Erfindung geht dabei von dem überraschend einfachen Gedanken aus, dass auf eine separate Fixierung der jeweils zweiten Lamelle, die einen Spalt zu der Innenwandfläche der Ausnehmung aufweist, dann verzichtet werden kann, wenn die Abbiegung bzw. Abwinkelung der ersten Lamelle zugleich auch die Stirnfläche der zweiten Lamelle mit einer entsprechenden Fixierkraft beaufschlagt. Indem also die Abbiegung bzw. Abwinkelung in der Fixierposition zwischen der Stirnfläche der zweiten Lamelle und der Innenwandfläche der Ausnehmung so verklemmt oder verspreizt ist, dass durch die Fixierkraft sowohl die erste Lamelle als auch die zweite Lamelle in der Ausnehmung festgelegt ist, erfüllt die Abbiegung bzw. Abwinkelung die gewünschte Haltefunktion für zugleich zwei Lamellen. Somit kann auf die Laminierung der planparallelen Lamellen verzichtet werden, sodass sich der Herstellungsaufwand reduzieren lässt. Zudem lassen sich die Lamellen nach der Trennung von der Welle oder der Achse problemlos separieren sowie wiederverwenden oder einer Verwertung zuführen. Selbst die Reparatur einzelner defekter Lamellen ist dadurch aufgrund der kraftschlüssigen Verbindung zwischen den Lamellen im Gegensatz zu der aus dem Stand der Technik bekannten, unlösbaren Adhäsionsverbindung der Lamellen möglich. Obwohl die Abbiegung oder die Abwinkelung der ersten Lamelle in einer bevorzugten Variante gegen genau eine Stirnfläche einer zweiten Lamelle anliegt, sind Abwandlungen der Erfindung nicht ausgeschlossen, bei denen in der Fixierposition die Abbiegung oder die Abwinkelung gegen verschiedene Stirnflächen mehrerer, paralleler Lamellen anliegt.

Im Sinne der vorliegenden Erfindung ist daher unter der Bezeichnung der zweiten Lamelle zumindest eine weitere Lamelle zu verstehen, sodass auch mehrere zweite Lamellen vorhanden sein können.

Dabei wirkt es sich besonders vorteilhaft aus, dass die Innenfläche der Abbiegung oder der Abwinkelung der ersten Lamelle einen einer lateralen Verlagerung der zweiten Lamelle in der Haupterstreckungsebene der Lamelle entgegenwirkenden Anschlag oder ein Widerlager bildet. Bei der Fixierung des Lamellenpakets durch das Einführen des Lamellenkeils in die nutenförmige Ausnehmung der Welle oder der Achse wird die Abbiegung oder die Abwinkelung so verformt, dass die erste Lamelle kraft- und formschlüssig fixiert wird und zugleich die dabei wirkenden Verformungskräfte an der zweiten Lamelle abgestützt sind, die dabei als ein die seitliche Verlagerung begrenzender Anschlag oder als ein Widerlager für die Kraftübertragung wirkt. Dabei dient der Anschlag der Festlegung einer definierten Position, ohne dass dabei zwingend auch eine Vorspannkraft auf die zweite Lamelle wirkt, wohingegen die Funktion des Widerlagers vor allem in der Kraftübertragung der verformten Abbiegung oder der Abwinkelung besteht.

Dabei ist vorzugsweise mittels der Seitenfläche der ersten Lamelle eine in der Haupterstreckungsebene der zweiten Lamelle wirkende Kraftkomponente übertragbar, um so die zweite Lamelle gegen die gegenüberliegende Innenwandfläche vorzuspannen.

Eine besonders zweckmäßige Ausgestaltungsform der Erfindung wird dabei auch dadurch erreicht, dass sich die zweite Lamelle mit ihrer Stirnfläche bis zu einer Schnittlinie der Ebene der Innenfläche der Abbiegung oder der Abwinkelung mit einer der zweiten Lamelle zugewandten, zu der zweiten Lamelle planparallelen Außenfläche der ersten Lamelle erstreckt. Somit endet die zweite Lamelle genau an der Abbiegung oder der Abwinkelung, insbesondere also an deren Knick- bzw. Biegelinie. Durch den entstehenden Formschluss wird zugleich die relative Position der beiden Lamellen festgelegt. Dabei ist es erfindungsgemäß nicht erforderlich, die Knick- bzw. Biegelinie bereits vor der Montage festzulegen, beispielsweise einzuprägen. Vielmehr entsteht die Knick- bzw. Biegelinie erst durch die Abbiegung oder Abwinkelung während des Montageprozesses entlang der Stirnfläche. Somit kann auf entsprechende vorbereitende Maßnahmen, beispielsweise eine Vorbiegung, verzichtet werden, wodurch der Herstellungsprozess weiter vereinfacht wird.

Vorzugsweise schließt die Innenfläche der Abbiegung oder der Abwinkelung der ersten Lamelle mit der Stirnfläche der zweiten Lamelle in der Fixierposition einen spitzen Winkel zwischen 20° und 60°, insbesondere zwischen 30° und 50° ein, um so einerseits die gewünschte Kraftübertragung von der Innenfläche der ersten Lamelle auf die Stirnfläche der zweiten Lamelle zu erreichen, andererseits aber auch eine selbsthemmende Fixierposition der Abbiegung oder der Abwinkelung zu erreichen, sodass diese sich im Gebrauch nicht selbsttätig lösen können. Insbesondere wird auf diese Weise eine Rückstellkraft der Abbiegung oder der Abwinkelung entgegen der Montagerichtung ausgeschlossen.

Eine besonders zweckmäßige Ausgestaltung wird dann erreicht, wenn mehrere benachbarte Lamellen jeweils eine Seitenfläche mit einer Abbiegung oder Abwinkelung aufweisen, die in der Fixierposition abwechselnd unterschiedlichen Innenwandflächen der Ausnehmung der Welle oder der Achse zugewandt sind. Hierdurch können weitgehend symmetrische Kontaktflächen geschaffen und gleichmäßige Fixierkräfte auf den beiden Seiten eingeleitet werden. Besonders vorteilhaft wirkt es sich dabei auch aus, dass alle Lamellen baugleich ausgeführt werden können und lediglich jede zweite Lamelle derart gedreht wird, dass die Seitenflächen mit der Abbiegung oder Abwinkelung abwechselnd auf verschiedenen Seiten liegen. Die Herstellung wird durch die Umsetzung des Gleichteileprinzips weiter vereinfacht.

Eine andere, ebenfalls besonders vorteilhafte Ausführungsform der Erfindung wird dann erreicht, wenn die Abbiegung oder die Abwinkelung bei der Montage durch eine translatorische Fügebewegung in die durch die Innenwandflächen begrenzte Ausnehmung der Welle oder Achse verformbar ist und in der Montageposition eine entgegen eines elastischen und/oder plastischen Verformungswiderstands verformte Orientierung einnimmt. Eine Vorformung entfällt dabei, indem die Verformung infolge der Montagekraft entsteht und der Lamellenkeil in der Fixierposition kraft- und formschlüssig lösbar oder unlösbar fixiert ist.

Die Lamellen des Lamellenpakets könnten abwechselnd eine unterschiedliche Formgebung derart aufweisen, dass abwechselnd die ersten Lamellen mit genau einer Seitenfläche ihrer Ausformung gegen einen Innenwandfläche und die zweiten Lamellen mit zwei Seitenflächen ihrer Ausformung gegen beide Innenwandflächen der Ausnehmung anliegen, wobei eine Vorformung der Abbiegung oder Abwinkelung der Seitenfläche jeweils nur in Bezug auf eine der beiden Innenwandflächen vorgesehen ist. Eine besonders vorteilhafte Ausführungsform der Erfindung wird demgegenüber dadurch realisiert, dass jede Ausformung einer Lamelle in der Fixierposition zumindest gegenüber einer der beiden Innenwandflächen der Ausnehmung einen Spalt mit einem Abstand einschließt und jede Lamelle mit ihrer Kontaktfläche der Seitenfläche jeweils gegen genau eine der beiden Innenwandflächen anliegt. Hierdurch zentriert sich der Lammellenkeil selbsttätig in der Ausnehmung.

Besonders bevorzugt handelt es sich bei den Lamellen um gestanzte Bleche, wobei die Lamellen zumindest abschnittsweise aus einem formstabilen, verformbaren, Wirbelstromverluste reduzierenden Material bestehen.

Vorzugsweise ist das Lamellenpaket aus einer Vielzahl von einzelnen Lamellen gebildet, die untereinander durch eine Stanzpaketierung verbunden sind.

Weiterhin wird die erfindungsgemäße Aufgabe noch gelöst mit einem für eine elektrische Maschine bestimmten Rotor oder Stator mit zumindest einem auf einer Welle oder Achse drehfest fixierten Lamellenpaket, wobei die Abbiegung oder Abwinkelung der ersten Lamelle derart zwischen der Stirnfläche der zweiten Lamelle und der Innenwandfläche der Ausnehmung verklemmt oder verspreizt ist, dass die Fixierkraft sowohl die erste als auch die zweite Lamelle in der Ausnehmung festlegt. Indem die Lamellen zunächst planparallel sind und die Abbiegung oder Abwinkelung durch das Einschieben oder Einführen der Ausformung in die Ausnehmung entsteht, ergibt sich eine Knick- oder Biegelinie entlang der Stirnfläche der zweiten Lamelle, die dadurch zugleich auch formschlüssig fixiert ist.

Die Erfindung lässt zahlreiche Ausführungsformen zu. Zur weiteren Verdeutlichung ihres Grundprinzips ist eine davon in der Zeichnung dargestellt und wird nachfolgend beschrieben.

Diese zeigt in
- Fig. 1: eine perspektivische Darstellung eines erfindungsgemäßen Lamellenpakets mit einem Lamellenkeil;
- Fig. 2: eine vergrößerte Vorderansicht des Lamellenkeils;
- Fig. 3: eine perspektivische Darstellung des in der Figur 2 gezeigten Lamellenkeils;
- Fig. 4: eine entlang der Linie IV-IV in der Figur 2 geschnittene Ansicht des Lamellenkeils in einer auf einer Welle fixierten Montageposition;
- Fig. 5: eine perspektivische Darstellung des Lamellenpakets und der Welle;
- Fig. 6: eine vergrößerte Schnittdarstellung des Lamellenkeils in einer auf einer Welle fixierten Montageposition gemäß der Figur 4;
- Fig. 7: eine vergrößerte perspektivische Darstellung einer Welleneinführnut der in der Figur 5 gezeigten Welle;
- Fig. 8: eine vergrößerte perspektivische Darstellung des auf der Welle fixierten Lamellenkeils;
- Fig. 9: eine Draufsicht auf die Welle mit dem fixierten Lamellenpaket;
- Fig. 10: eine Draufsicht einer alternativen Ausführungsform des in der Figur 4 dargestellten Lamellenkeils in der Montageposition auf der Welle.

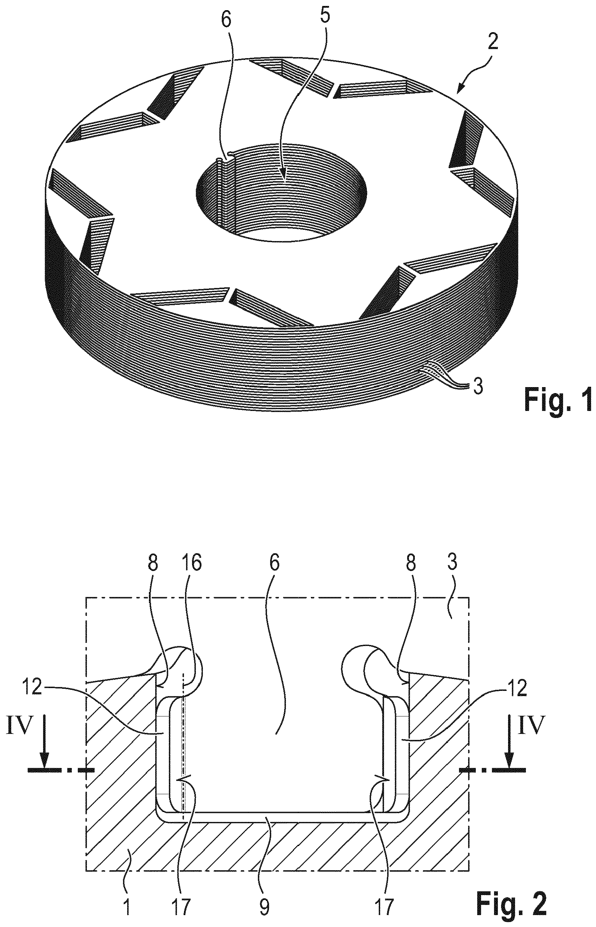

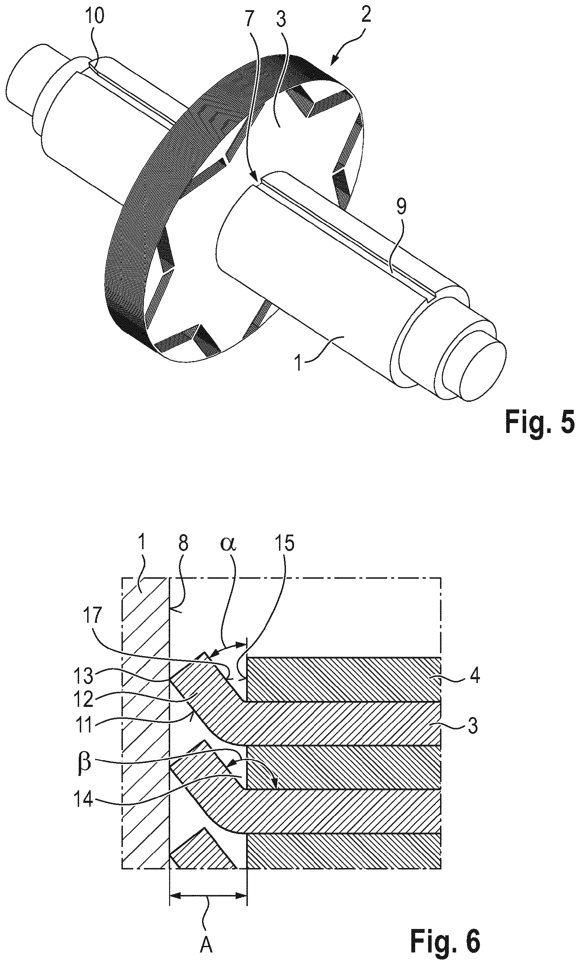

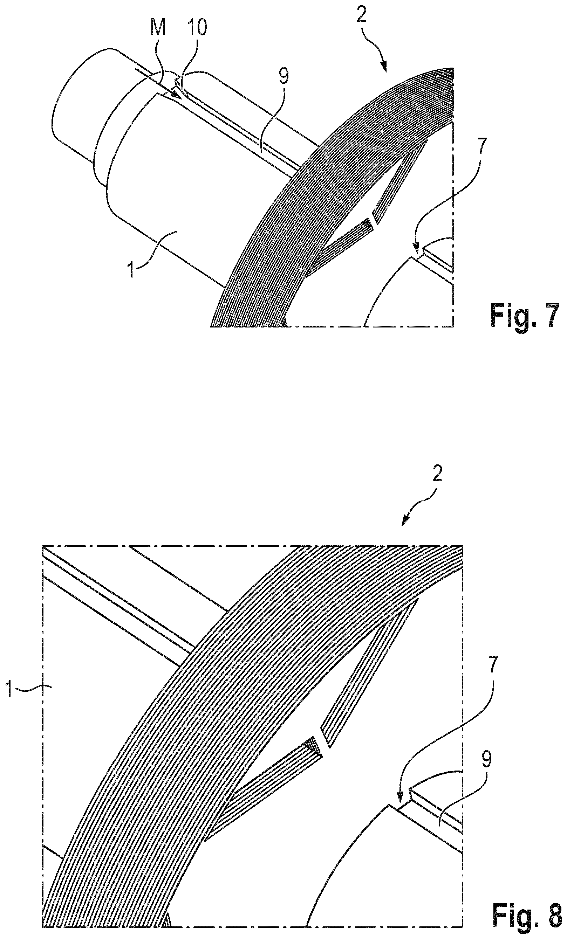

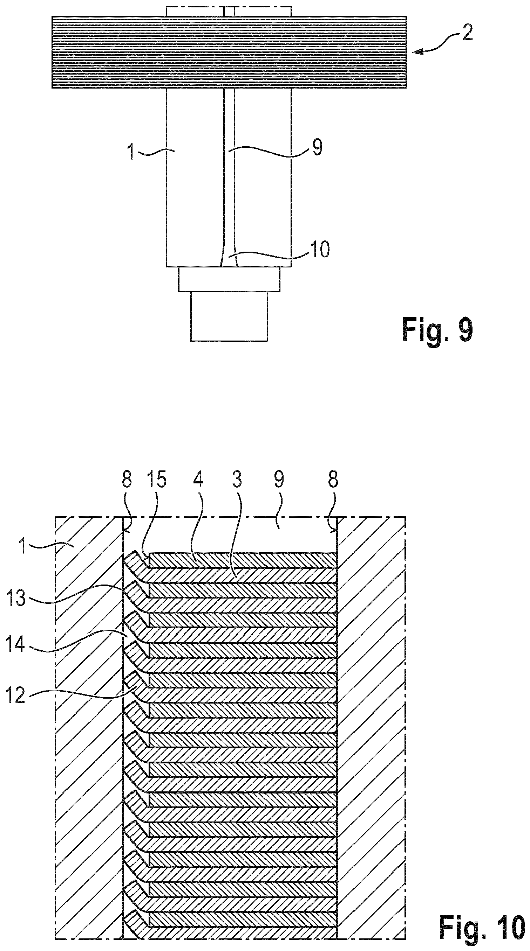

Ein auf einer Welle 1 einer nicht weiter dargestellten elektrischen Maschine drehfest fixierbares Lamellenpaket 2 mit einer Vielzahl von planparallelen, flächig gegeneinander anliegenden Lamellen 3, 4 wird nachstehend anhand der Figuren 1 bis 10 näher dargestellt. Jede der Vielzahl von Lamellen 3, 4 hat eine in ihrer Grundform kreisförmige Durchbrechung 5 für die in den Figuren 5 und 9 gezeigte Welle 1, in die eine radial nach innen weisende Ausformung 6 jeder Lamelle 3, 4 hineinragt. Gemeinsam bilden diese Ausformungen 6 der Lamellen 3, 4 einen Lamellenkeil 7, der in einer durch seitliche Innenwandflächen 8 begrenzten nutenförmigen Ausnehmung 9 der Welle 1 drehfest fixiert ist.

Um eine belastbare und zuverlässige Fixierung des Lammellenkeils 7 in der nutenförmigen Ausnehmung 9 zu erreichen, wird dieser entgegen seines Verformungswiderstands mittels einer in der Figur 9 erkennbaren keilförmigen Einführhilfe 10 translatorisch in Montagerichtung M in die Ausnehmung 9 eingeführt, wobei es zu einer Verformung einer jeweiligen Seitenfläche 11 der Ausformungen 6 der Lamellen 3, 4 durch eine Abwinkelung 12 der Seitenflächen 11 kommt, bis die Abwinkelungen 12 mit einer Haupterstreckungsebene der die Ausformungen 6 aufweisenden Lamellen 3, 4 einen stumpfen Winkel β einschließen. Die Abwinkelung 12 der Seitenfläche 11 bildet zugleich eine Kontaktfläche 13 zur Anlage gegen die benachbarte Innenwandfläche 8 zur kraft- und formschlüssigen Fixierung in der Ausnehmung 9.

Um einen ausreichenden Freiraum für die Abwinkelungen 12 der Lamellen 3, 4 zu schaffen, folgt auf jede Ausformung 6 einer ersten Lamelle 3 mit einer als Abwinkelung 12 dienenden Seitenfläche 11 eine zweite oder weitere Lamelle 4 mit einer Ausformung 6, die in der Fixierposition keine Kontaktfläche 13, sondern einen Spalt 14 zu der Innenwandfläche 8 mit einem Abstand A begrenzt. Dadurch können die Seitenflächen 11 der jeweils ersten Lamellen 3 in der Fixierposition bis in den Spalt 14 zwischen der Innenwandfläche 8 der Ausnehmung 9 und einer Stirnfläche 15 der Ausformung 6 der zweiten Lamelle 4 abgewinkelt werden.

Der wesentliche Erfindungsgedanke besteht vor allem darin, dass die Abwinkelung 12 der ersten Lamelle 3 derart zwischen der Stirnfläche 15 der zweiten Lamelle 4 und der Innenwandfläche 8 der Ausnehmung 9 verklemmt oder verspreizt ist, dass die Fixierkraft sowohl die erste Lamelle 3 als auch die zweite Lamelle 4 in der Ausnehmung 9 festlegt. Indem die Lamellen 3, 4 zunächst planparallel sind und die Abwinkelung 12 durch das Einschieben oder Einführen der Ausformung 6 in die Ausnehmung 9 entsteht, ergibt sich eine Knick- oder Biegelinie 16 entlang der Stirnfläche 15 der zweiten Lamelle 4, die dadurch formschlüssig fixiert ist. Die Fixierposition ist dann erreicht, wenn die Stirnfläche 15 der zweiten Lamelle 4 mit einer Innenfläche 17 der Abwinkelung 12 der ersten Lamelle 3 einen spitzen Winkel α von ca. 45° einschließt. Indem die Innenfläche 17 der Abwinkelung 12 der ersten Lamelle 3 einen einer lateralen Verlagerung der zweiten Lamelle 4 in der Haupterstreckungsebene der Lamelle 4 entgegenwirkenden Anschlag bildet, zentrieren sich die Lamellen 3, 4 nicht nur in der Ausnehmung 9 und relativ zueinander, sondern es entsteht auch eine belastbare Verbindung der Lamellen 3, 4 zu dem Lamellenpaket 2, ohne dass hierzu zusätzliche Verbindungsmittel, beispielsweise Adhäsionsmittel, erforderlich sind. Diese Verbindung der Lamellen 3, 4 zu dem Lamellenpaket 2 lässt sich zudem zu Reparatur- oder Recyclingzwecken wieder lösen.

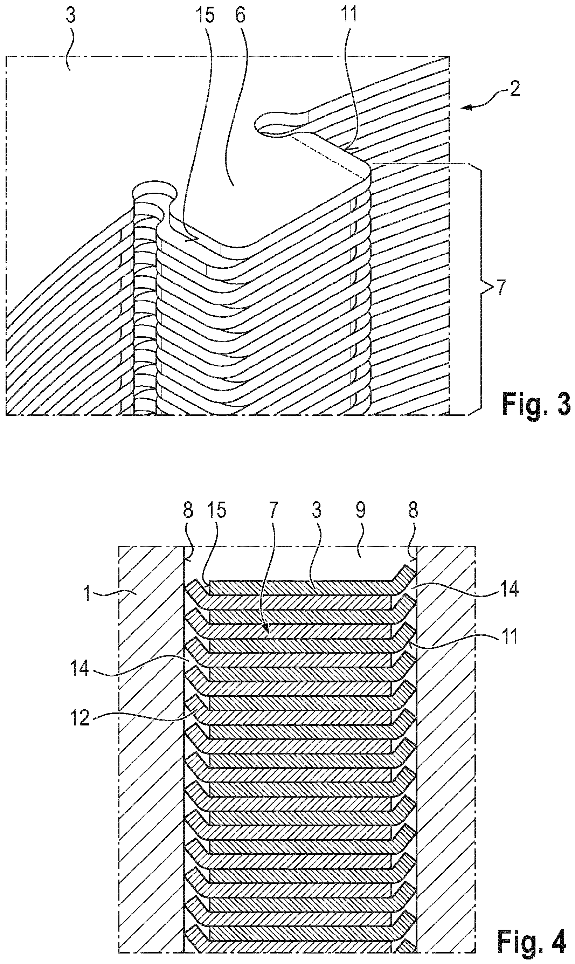

In der Figur 4 ist eine erste Ausführungsform gezeigt, bei der alle Lamellen 3 baugleich ausgeführt sind und jede zweite Lamelle 3 derart gedreht wird, dass die Seitenflächen 11 mit der Abwinkelung 12 abwechselnd auf verschiedenen Seiten liegen. Jede Lamelle 3 stützt so durch die Abwinkelung 12 die nachfolgende Lamelle 3, die ihrerseits wiederum, nun auf der gegenüberliegenden Innenwandfläche 8, die nächste Lamelle 3 stützt und fixiert.

In einer weiteren, in der Figur 10 gezeigten Ausführungsform liegen alle Lamellen 3, 4 mit ihren Ausformungen 6 jeweils gegen eine der beiden Innenwandflächen 8 der Ausnehmung 9 an. Die Abwinkelungen 12 entstehen bei der Montage daher ausschließlich an der gegenüberliegenden Innenwandfläche 8. Hierzu sind die jeweils ersten Lamellen 3 mit der die Abwinkelung 12 bildenden Seitenfläche 11 der Ausformung 6 ausgestattet, während die jeweils zweiten Lamellen 4 keine entsprechenden Seitenflächen aufweisen. Die ersten Lamellen 3 und zweiten Lamellen 4 haben daher unterschiedliche Zuschnitte und werden in dem Lamellenpaket 2 abwechselnd geschichtet.

### Bezugszeichenliste

- 1: Welle
- 2: Lamellenpaket
- 3: Lamelle
- 4: Lamelle
- 5: Durchbrechung

- 6: Ausformung
- 7: Lamellenkeil
- 8: Innenwandfläche
- 9: Ausnehmung
- 10: Einführhilfe

- 11: Seitenfläche
- 12: Abwinkelung
- 13: Kontaktfläche
- 14: Spalt
- 15: Stirnfläche

- 16: Biegelinie
- 17: Innenfläche

- A: Abstand
- M: Montagerichtung
- α: Winkel
- β: Winkel

## Patentansprüche

1. Ein für eine elektrische Maschine bestimmtes, auf einer Welle (1) oder einer Achse drehfest fixierbares Lamellenpaket (2) mit einer Vielzahl von planparallelen, flächig gegeneinander anliegenden Lamellen (3, 4), die jeweils eine insbesondere ringförmig geschlossene Durchbrechung (5) für die Welle (1) oder Achse aufweisen, wobei mehrere Lamellen (3, 4) zur form- und kraftschlüssigen Fixierung des Lamellenpakets (2) in zumindest einer, durch seitliche Innenwandflächen (8) begrenzten nutenförmigen Ausnehmung (9) der Welle (1) oder der Achse zumindest eine nach innen weisende Ausformung (6) aufweisen, wobei mehrere Ausformungen (6) gemeinsam zumindest einen Lammellenkeil (7) bilden und zumindest einzelne der Ausformungen (6) in Umfangsrichtung zumindest eine Seitenfläche (11) mit einer Abbiegung und/oder Abwinkelung (12) aufweisen, die mit einer Haupterstreckungsebene der die Ausformung (6) aufweisenden Lamelle (3, 4) einen stumpfen Winkel (β) einschließt, wobei die Seitenfläche (11) eine Kontaktfläche (13) zur Anlage gegen die Innenwandfläche (8) und zur kraft- und formschlüssigen Fixierung in der Ausnehmung (9) hat, wobei in dem Lamellenpaket (2) auf jede Lamelle (3) mit einer die Abbiegung oder die Abwinkelung (12) aufweisenden Ausformung (6) zumindest eine weitere, mit einer eine Stirnfläche (15) aufweisenden Ausformung (6) ausgestattete Lamelle (4) folgt, wobei die Stirnfläche (15) in der Fixierposition einen Spalt (14) zu der Innenwandfläche (8) mit einem Abstand (A) begrenzt, und sich die Abbiegung oder die Abwinkelung (12) der ersten Lamelle (3) in der Fixierposition bis in den durch die zweite Lamelle (4) begrenzten Spalt (14) erstreckt und die Innenfläche (17) der ersten Lamelle (3) der Stirnfläche (15) der Ausformung (6) der zweiten Lamelle (4) zugewandt ist, **dadurch gekennzeichnet, dass** die Innenfläche (17) der Abbiegung und/oder der Abwinkelung (12) der ersten Lamelle (3) mit einem spitzen Winkel (α) gegenüber der Stirnfläche (15) der zweiten Lamelle (4) gegen die Stirnfläche (15) derart anliegt, dass eine auf die Kontaktfläche (13) der Abbiegung oder der Abwinkelung (12) der ersten Lamelle (3) wirkende Fixierkraft mittels der Innenfläche (17) auf die Stirnfläche (15) der Ausformung (6) der zweiten Lamelle (4) übertragbar ist.

2. Lamellenpaket (2) nach Anspruch 1, **dadurch gekennzeichnet, dass** die Innenfläche (17) der Abbiegung oder der Abwinkelung (12) der ersten Lamelle (3) einen einer Verlagerung der zweiten Lamelle (4) in ihrer Haupterstreckungsebene entgegenwirkenden Anschlag oder ein Widerlager bildet.

3. Lamellenpaket (2) nach Anspruch 1 oder 2, **dadurch gekennzeichnet, dass** mittels der Seitenfläche (11) der ersten Lamelle (3) eine in der Haupterstreckungsebene der zweiten Lamelle (4) wirkende Kraftkomponente übertragbar ist.

4. Lamellenpaket (2) nach zumindest einem der vorhergehenden Ansprüche, **dadurch gekennzeichnet, dass** sich die zweite Lamelle (4) mit ihrer Stirnfläche (15) bis zu einer Biegelinie (16) der Innenfläche (17) mit einer Außenfläche der ersten Lamelle (3) erstreckt, die der zweiten Lamelle (4) zugewandt ist.

5. Lamellenpaket (2) nach zumindest einem der vorhergehenden Ansprüche, **dadurch gekennzeichnet, dass** die Innenfläche (17) der Abbiegung oder der Abwinkelung (12) der ersten Lamelle (3) mit der Stirnfläche (15) der zweiten Lamelle (4) in der Fixierposition einen spitzen Winkel (α) zwischen 20° und 60°, insbesondere zwischen 30° und 50° einschließt.

6. Lamellenpaket (2) nach zumindest einem der vorhergehenden Ansprüche, **dadurch gekennzeichnet, dass** mehrere benachbarte Lamellen (3, 4) jeweils genau eine Seitenfläche (11) mit einer Abbiegung oder Abwinkelung (12) aufweisen, die in der Fixierposition abwechselnd unterschiedlichen, insbesondere gegenüberliegenden Innenwandflächen (8) der Ausnehmung (9) der Welle (1) oder der Achse zugewandt sind.

7. Lamellenpaket (2) nach zumindest einem der vorhergehenden Ansprüche, **dadurch gekennzeichnet, dass** in der Fixierposition die zumindest eine Ausformung (6) der ersten Lamelle (3) gegen die zwei einander gegenüberliegenden Innenwandflächen (8) der Ausnehmung (9) der Welle (1) oder der Achse anliegen und die Ausformung (6) der zweiten Lamellen (4) mit der Seitenfläche (11) gegen die erste Innenwandfläche (8) der Ausnehmung (9) der Welle (1) oder der Achse anliegen und die Stirnfläche (15) der Seitenfläche (11) gegenüber der zweiten Innenwandfläche (8) der Ausnehmung (9) der Welle (1) oder der Achse beabstandet ist und einen Spalt (14) einschließt.

8. Lamellenpaket (2) nach zumindest einem der vorhergehenden Ansprüche, **dadurch gekennzeichnet, dass** die Abbiegung oder die Abwinkelung (12) bei der Montage durch eine translatorische Fügebewegung in Montagerichtung (M) in die durch die Innenwandflächen (8) begrenzte Ausnehmung (9) der Welle (1) oder der Achse verformbar ist und in der Montageposition eine entgegen eines Verformungswiderstands verformte Orientierung einnimmt.

9. Lamellenpaket (2) nach zumindest einem der vorhergehenden Ansprüche, **dadurch gekennzeichnet, dass** die Lamellen (3, 4) gestanzte Bleche sind.

10. Eine für eine elektrische Maschine bestimmter Rotor oder Stator mit zumindest einem auf einer Welle (1) oder Achse drehfest fixierten Lamellenpaket (2) nach zumindest einem der vorhergehenden Ansprüche.
